# EUROPÄISCHE PATENTANMELDUNG

(11) **EP 0 881 100 A2**
(43) Veröffentlichungstag der Anmeldung: **02.12.1998**
(21) Anmeldenummer: 98890158.3
(22) Anmeldetag: 26.05.1998
(51) Int. Cl.: B60B 33/08, B60B 33/00

(54) **Rolle zum Anbringen an Möbeln od.dgl.**

(30) Priorität: 28.05.1997 AT 907/97
(71) Anmelder: JOMA Kunststoffwerk und Warenhandel Ges.m.b.H., 2345 Brunn am Gebirge (AT)
(72) Erfinder: Matzka, Hans, 2345 Brunn/Geb. (AT)
(74) Vertreter: Rippel, Andreas, Dipl.-Ing.

(57) **Zusammenfassung**

Eine Rolle zur Anbringung an Möbeln od. dgl., weist eine in einem Haltekörper (1) geführte Tragkugel (5) auf, die durch eine Anzahl kleinerer, im Haltekörper (1) entlang einer Kugelfläche gelagerter Lagerkugeln (3) abgestützt ist.

Um die Abrollung der Kugeln zu verbessern, weist der Haltekörper (1) eine der Anzahl der Lagerkugeln (3) entsprechende Anzahl von Ausnehmungen (2, 2₁, 2₂, 2₃) zur Aufnahme je einer Lagerkugel (3) auf.

## Beschreibung

Die Erfindung bezieht sich auf eine Rolle zur Anbringung an Möbeln od. dgl., mit einer in einem Haltekörper geführten Tragkugel, die durch eine Anzahl kleinerer, im Haltekörper entlang einer Kugelfläche gelagerter Lagerkugeln abgestützt ist.

Bei z.B. aus der FR 540 669 A bekannten Möbelrollen dieser Art liegen die Lagerkugeln frei nebeneinander, was einen relativ hohen Reibungswiderstand beim Abrollen ergibt. Bei der Bewegung der am Boden abrollenden Tragkugel bewegen sich die aneinanderliegenden Punkte der Lagerkugeln nämlich in entgegengesetzter Richtung.

Eine Verbesserung der Reibungsverhältnisse ergibt sich bei Anordnung eines ringförmigen Hohlraumes, durch den die Lagerkugeln beim Abrollen herumgeführt werden. Doch auch bei dieser, z.B. aus der AT 392 442 B oder der AT 303/94 A bekannten Anordnung, wird manchmal bei höherer Belastung die Reibung zwischen den Lagerkugeln so groß, daß es zu einem Blockieren der insbesondere am Boden abgestützten Tragkugel kommt. Dies tritt auch dann ein, wenn zur Vergleichmäßigung der Beanspruchung im Bereich des höchsten Punktes der Kugelfläche eine Aussparung vorgesehen ist.

Die Erfindung hat es sich zum Ziel gesetzt, eine Rolle zu schaffen, bei der eine geringere Reibung auftritt und somit ein Blockieren der Tragkugel praktisch ausgeschlossen ist.

Erreicht wird dies bei einer Rolle der eingangs genannten Art dadurch, daß der Haltekörper eine der Anzahl der Lagerkugeln entsprechende Anzahl von Ausnehmungen zur Aufnahme je einer Lagerkugel aufweist. Bei einer erfingungsgemäßen Rolle kommt es zu keiner gegenseitigen Berührung der Lagerkugeln, wodurch überraschenderweise die Reibung so gering wird, daß die gestellten Ziele erreicht werden.

Bei einer bevorzugten Ausführungsform der Erfindung ist eine Ausnehmung mittig im Haltekörper angeordnet, und die anderen Ausnehmungen sind entlang konzentrischer Kreise um diese eine Ausnehmung herum angeordnet. Diese Aufteilung der Lagerkugeln ergibt eine gleichmäßige Wirkung auf die Tragkugel, wodurch eine weitere Verbesserung des Laufverhaltens dieser Kugel erreicht wird.

Bei durchgeführten Versuchen hat sich insbesondere eine Ausführungsform als zweckmäßig erwiesen, bei der drei konzentrische Kreise von Ausnehmungen angeordnet sind.

Eine besonders vorteilhafte Abstimmung der verwendeten Materialien ergibt sich, wenn der Haltekörper aus Polyoxymethylen, wenigstens die Oberflächenschichte der Tragkugel aus Polyurethan oder Gummi besteht und die Lagerkugeln aus Stahl bestehen. Aus Polyurethan bestehende Tragkugeln und Lagerkugeln aus Stahl sind bereits aus der AT 397 371 B bekannt.

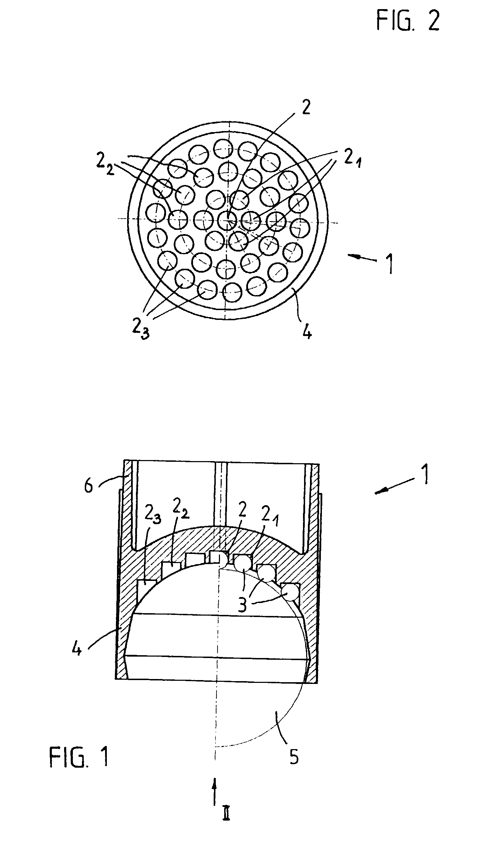

Nachstehend ist die Erfindung anhand eines in den Zeichnungen dargestellten Ausführungsbeispieles näher beschrieben, ohne auf dieses Beispiel beschränkt zu sein. Dabei zeigt Fig. 1 einen Querschnitt durch einen erfindungsgemäßen Lagerkörper, wobei in der rechten Hälfte dieser Figur auch die Lagerkugeln und die Tragkugel eingezeichnet sind. Die Fig. 2 stellt eine Ansicht in Richtung des Pfeiles II in Fig. 1 dar.

Der aus Kunststoff bestehende Lagerkörper 1 nach den Zeichnungen weist entlang einer Kugelfläche angeordnete Ausnehmungen 2, 2₁, 2₂ und 2₃ auf, in denen Lagerkugeln 3 gelagert sind. Wie aus Fig. 2 ersichtlich ist, bilden die Mittelpunkte der Ausnehmungen 2₁, 22 und 23 konzentrische Kreise, deren Mittelpunkt der Mittelpunkt der Ausnehmung 2 ist. Eine hülsenförmige, nach unten weisende Aufnahme 4 umschließt eine insbesondere am Boden abzustützende Tragkugel 5 zu mehr als der Hälfte, sodaß die Tragkugel 5 aus dem Lagerkörper 1 nicht herausfallen kann. An ihrer Oberseite liegt die Tragkugel 5 an den Lagerkugeln 3 an.

Der Lagerkörper besteht vorzugsweise aus Polyoxymethylen und die Tragkugel 5 aus thermoplastischem Kunststoff und einer Oberflächenschicht aus Polyurethan oder Gummi mit einer Härte von 90 Shore-A bis 55 Shore-D. Die Lagerkugeln 3 bestehen aus Stahl, insbesondere rostfreiem Stahl.

Oben besitzt der Lagerkörper 1 eine Hülse 6, die der Befestigung an einem Möbel dienen kann. Die Befestigung kann dabei direkt erfolgen, z.B. durch Einschieben der Hülse 6 in ein Möbelbein. In einem solchen Fall ist die Kugel 5 allerdings nicht arretierbar.

Der Lagerkörper 6 kann aber auch in einer Büchse gleitbar gelagert sein, wobei eine in die Hülse 6 eingesetzte Feder den Lagerkörper 6 nach unten drückt. Eine solche Anordnung ist Stand der Technik und z.B. in der bereits genannten AT 392 442 B beschrieben. Es wird dadurch erreicht, daß bei Belastung des Möbels der Lagerkörper 1 entgegen der Kraft der eingesetzten Feder nach oben geschoben wird und sich die umgebende Büchse bzw. das damit verbundene Möbelbein o.dgl. sich direkt auf dem Boden aufsetzt. Das Möbel ist damit auf dem Boden fixiert, als ob keine Tragkugel 5 vorhanden wäre.

Im Rahmen der Erfindung sind zahlreiche Abänderungen möglich. So kann die Anzahl und Anordnung der Lagerrollen wie auch die Befestigung des Lagerkörpers 1 am Möbel od. dgl. vielfach verändert werden. Eine erfindungsgemäße Rolle ist auch nicht nur bei Möbeln verwendbar. Es ist z.B die Anbringung an schweren Türflügeln möglich. Auch bei Rollenbahnen kann eine Rolle nach der Erfindung eingesetzt werden. Der Lagerkörper könnte auch aus einem technischen Kunststoff mit entsprechenden Gleiteigenschaften, z.B. Polyamid, bestehen.

## Patentansprüche

1. Rolle zur Anbringung an Möbeln od. dgl., mit einer in einem Haltekörper (1) geführten Tragkugel (5), die durch eine Anzahl kleinerer, im Haltekörper (1) entlang einer Kugelfläche gelagerter Lagerkugeln (3) abgestützt ist, **dadurch gekennzeichnet**, daß der Haltekörper (1) eine der Anzahl der Lagerkugeln (3) entsprechende Anzahl von Ausnehmungen (2, 2₁, 2₂, 2₃) zur Aufnahme je einer Lagerkugel (3) aufweist.

2. Rolle nach Anspruch 1, **dadurch gekennzeichnet**, daß eine Ausnehmung (2) mittig im Haltekörper (1) angeordnet ist und die anderen Ausnehmungen (2₁, 2₂, 2₃) entlang konzentrischer Kreise um diese eine Ausnehmung (2) herum angeordnet sind.

3. Rolle nach Anspruch 2, **dadurch gekennzeichnet**, daß drei konzentrische Kreise von Ausnehmungen (2₁, 2₂, 2₃) angeordnet sind.

4. Rolle nach einem der Ansprüche 1 bis 3, **dadurch gekennzeichnet**, daß der Haltekörper (1) aus Polyoxymethylen, wenigstens eine Oberflächenschichte der Tragkugel (5) aus Polyurethan oder Gummi besteht und die Lagerkugeln (3) aus Stahl bestehen.
